Europäisches Patentamt

(19) European Patent Office

Office européen des brevets

(11) Numéro de publication: **0 051 007 B1**

(12) **FASCICULE DE BREVET EUROPEEN**

(45) Date de publication du fascicule du brevet:
29.08.84

(21) Numéro de dépôt: **81401547.5**

(22) Date de dépôt: **06.10.81**

(51) Int. Cl.³: **H 04 N 3/16**

(54) **Dispositif de balayage vertical et/ou horizontal à correction sur une partie de l'image, et récepteur de télévision comportant un tel dispositif.**

(30) Priorité: **28.10.80 FR 8023020**

(43) Date de publication de la demande:
**05.05.82 Bulletin 82/18**

(45) Mention de la délivrance du brevet:
**29.08.84 Bulletin 84/35**

(84) Etats contractants désignés:
**DE GB IT**

(56) Documents cités:
**FR - A - 2 287 808
FR - A - 2 438 395
US - A - 3 697 777**

(73) Titulaire: **SOCIETE D'ELECTRONIQUE DE LA REGION PAYS DE LOIRE SEREL, 74, rue du Surmelin, F-75020 Paris (FR)**

(72) Inventeur: **Potin, Michel, THOMSON-CSF SCPI 173, Bld Haussmann, F-75360 Paris Cedex 08 (FR)**
Inventeur: **Guillon, Jean-Claude, THOMSON-CSF SCPI 173, bld Haussmann, F-75360 Paris Cedex 08 (FR)**

(74) Mandataire: **Thierr, Françoise et al, THOMSON-CSF SCPI 173, Bld Haussmann, F-75379 Paris Cedex 08 (FR)**

## Description

L'invention est relative à un dispositif de balayage, notamment vertical, d'un récepteur de télévision et à un récepteur comportant un tel dispositif.

En télévision chaque image est obtenue par balayage d'un point limineux sur un écran selon des lignes qui sont parcourues de gauche à droite et de haut en bas. Le point lumineux est produit par l'impact d'un pinceau d'électrons contre un écran recouvert de substances luminophores. Ce pinceau d'électrons est engendré par un canon à électrons et sa déviation, pour produire le balayage défini ci-dessus, est obtenue grâce à des champs magnétiques variables fournis par deux bobines entourant le col du tube et parcourues par des courants électriques variant sensiblement en dents-de-scie. L'une de ces bobines, appelée déviateur horizontal, est destinée à produire le champ magnétique permettant le balayage des lignes, c'est-à-dire le balayage horizontal, et l'autre bobine, appelée déviateur vertical, ou déviateur trame, produit le champ magnétique permettant le déplacement vertical du spot lumineux sur l'écran du récepteur.

Dans la demande de brevet européen n° 79 400 520.7 au nom de la demanderesse on a décrit un dispositif pour engendrer le courant dans le déviateur vertical qui tire son énergie uniquement de l'étage de balayage horizontal en mettant à profit les impulsions de surtension produites aux bornes du déviateur horizontal lors de l'annulation du courant traversant ce déviateur à chaque retour de ligne. Ces impulsions, appelées impulsions de retour-ligne, sont recueillies aux bornes de l'enroulement secondaire d'un transformateur qui alimente un circuit comprenant, en série avec un interrupteur commandé, le déviateur vertical et un condensateur de capacité suffisamment élevée pour que la tension à ses bornes garde toujours la même polarité et que le circuit puisse se comporter à la fois comme un récepteur et un générateur de courant. L'interrupteur est commandé pour qu'à chaque balayage d'une ligne il soit conducteur pendant un temps qui est fonction du numéro de la ligne correspondante. A cet effet, on prévoit un oscillateur engendrant un signal en dents de scie à la fréquence de balayage vertical et représentant l'allure souhaitée pour la variation du courant traversant le déviateur vertical et un convertisseur tension — temps pour transformer, à chaque balayage de ligne, le niveau du signal de sortie de l'oscillateur en une durée de conduction de l'interrupteur commandé. Le circuit de commande comporte de préférence une entrée de contre-réaction sur laquelle est appliqué un signal représentant l'intensité du courant traversant le déviateur vertical de façon que ce courant suive le plus fidèlement possible les variations du signal produit par l'oscillateur.

L'intensité du courant traversant le déviateur vertical doit varier en fonction du temps suivant une loi bien déterminée car, si elle s'en écarte, l'image est déformée, c'est-à-dire affectée de distorsions. Cette loi n'est, en général, pas une loi de variation parfaitement en dents de scie, c'est-à-dire une variation linéaire périodique, mais une loi de variation en dents de scie déformées. Les déformations qu'il faut conférer aux dents de scie pour obtenir la loi donnant le minimum de distorsions de l'image sont appelées des corrections. A cet effet, on utilise habituellement un générateur engendrant des signaux en dents de scie et on prévoit des moyens pour effectuer des corrections, c'est-à-dire corriger ces signaux.

L'invention résulte de la constatation que les corrections utilisées jusqu'à présent ont un effet sur la totalité de la période de balayage, c'est-à-dire sur la totalité de l'image, et que de telles corrections ne donnent pas toujours satisfaction.

Le dispositif de balayage selon l'invention est caractérisé en ce qu'il comporte un moyen pour effectuer une correction de distorsion uniquement sur une partie de l'image.

On a en effet constaté que dans certains cas, notamment dans le cas du circuit de balayage vertical du type du brevet européen n° 79 400 520.7, une partie de l'image ne nécessitait pas de correction et qu'ainsi une correction qui aurait pour but de corriger le reste de l'image affecterait de façon déffavorable la partie antérieurement satisfaisante. L'invention permet ainsi, de ne corriger que la partie de l'image en ayant besoin.

Dans le mode de réalisation préférré de l'invention les moyens pour effectuer la correction partielle de l'image font partie de l'oscillateur de déviation verticale et n'affectent ainsi pas les paramètres de l'asservissement au signal de l'oscillateur du courant dans le déviateur vertical, ce qui facilite la réalisation de la boucle d'asservissement, notamment pour éviter les régimes transitoires — à conséquences gênantes pour le spectateur -apparaissant lors des changements de programmes.

Dans une réalisation l'oscillateur comporte un condensateur chargé par un courant d'intensité constante d'intensité constante auquel est superposé, pour la correction, un courant dont l'intensité s'annule lorsque la tension aux bornes du condensateur, qui constitue la tension de sortie de l'oscillateur, correspond à une valeur pour laquelle une correction n'est pas nécessaire. Par exemple, lorsque la correction doit être effectuée pour les plus faibles valeurs de la tension de sortie, le courant i de correction est obtenu en connectant une source à tension constante, égale à la valeur limite pour laquelle une correction est nécessaire, à une armature du condensateur par l'intermédiaire d'une diode et d'une résistance. Une telle correction convient particulièrement bien au circuit de balayage vertical du type mentionné ci-dessus.

D'autres caractéristiques et avantages de l'invention apparaîtront avec la description de certains de ses modes de réalisation, celle-ci étant effectuée en se référant aux dessins ci-annexés sur lesquels:

— la figure 1 représente un circuit de balayage vertical auquel s'applique l'invention,

— la figure 2 montre un mode de réalisation d'un oscillateur selon l'invention,

— la figure 3 est une variante de la figure 2, et

— la figure 4 est un diagramme montrant les signaux obtenus à l'aide de l'oscillateur représenté sur la figure 2.

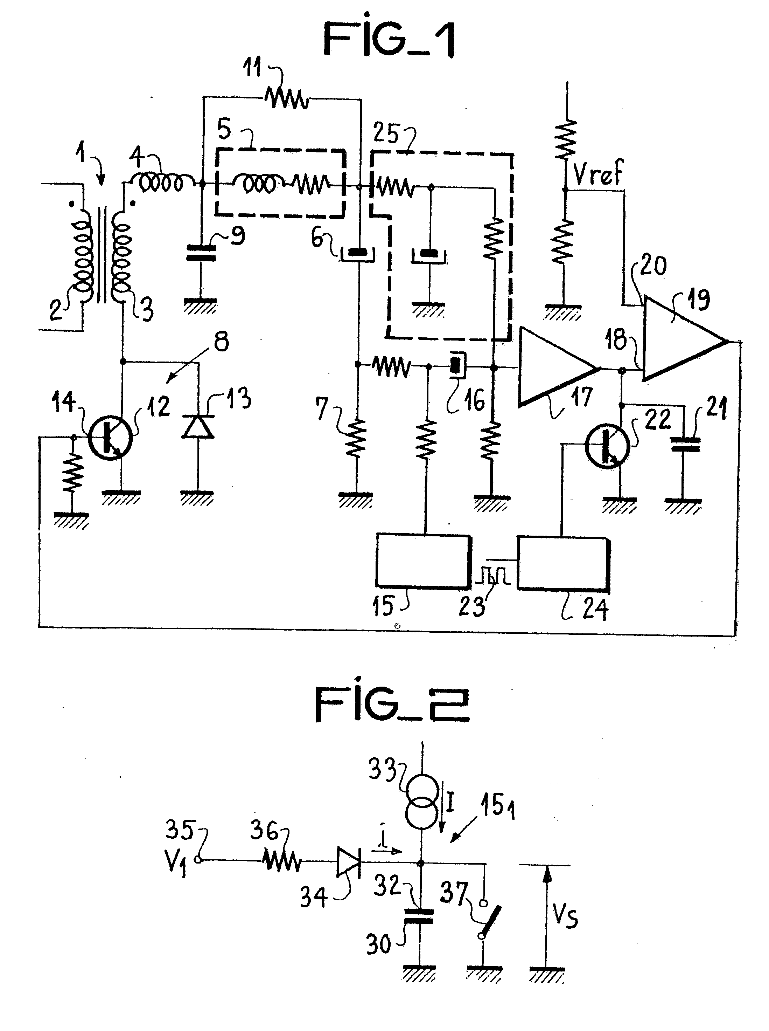

Le circuit de balayage vertical représenté sur la figure 1 correspond à celui décrit dans ledit brevet européen n° 79 400 520.7 au nom de la demanderesse.

Il comprend un transformateur 1 appelé »transformateur-ligne« dont l'enroulement primaire 2 reçoit les impulsions de retour-ligne et dont l'enroulement secondaire 3 est connecté en série avec: une inductance 4, le déviateur vertical 5, un condensateur de liaison 6, une résistance de mesure 7 et un interrupteur électronique commandé 8.

Un condensateur de filtrage 9 est en parallèle sur l'ensemble formé par l'inductance 4, l'enroulement secondaire 3 et l'interrupteur 8 en série.

Une résistance 11 est en parallèle sur le déviateur vertical 5.

L'interrupteur électronique 8 comprend d'une part, un transistor 12 de type NPN et d'autre part, une diode 13 connectée en sens inverse du transistor. Un tel interrupteur 8 conduit le courant dans les deux sens.

La tension aux bornes du condensateur 6 est suffisamment élevée pour la tension aux bornes de l'ensemble formé par le déviateur 5, ce condensateur 6 et la résistance 7 conserve toujours la même polarité quelque soit le sens du courant traversant le déviateur 5.

L'interrupteur 8 est commandé à l'aide de signaux appliqués sur la base 14 du transistor 12 de manière qu'à chaque période d'un signal à la fréquence de balayage horizontal, il soit conducteur pendant un temps qui est fonction du numéro de la ligne ou, ce qui revient au même, pendant un temps dépendant de l'amplitude d'un signal sensiblement en dents de scie à la fréquence de balayage vertical.

A cet effet, on prévoit un oscillateur 15 engendrant des signaux en dents de scie affectées d'une correction relié, par l'intermédiaire d'un condensateur 16, à l'entrée d'un amplificateur 17 dont la sortie est connectée à la première entrée 18 d'un comparateur 19. Sur la seconde entrée 20 de ce comparateur 19 est appliqué un potentiel $V_{ref}$ constant. La sortie du comparateur est connectée à la base 14 du transistor 12.

L'entrée 18 du comparateur 19 est également reliée d'une part à la première borne d'un condensateur 21 dont l'autre borne est à la masse et d'autre part au collecteur d'un transistor 22 de type NPN dont l'émetteur est à la masse et dont la base reçoit des impulsions de retour-ligne 23 par l'intermédiaire d'un étage 24 de mise en forme.

L'entrée de l'amplificateur 17 reçoit, également par l'intermédiaire du condensateur 16, un autre signal qui représente l'intensité du courant traversant le déviateur 5 et qui est proportionnel à la tension aux bornes de la résistance de mesure 7. On effectue ainsi une contre-réaction car l'entrée de l'amplificateur 17 reçoit de cette manière un signal d'erreur fonction de la différence entre le signal de consigne produit par l'oscillateur 15 et le signal mesuré détecté aux bornes de la résistance 7.

Un signal représentant la tension aux bornes du condensateur 6 est également appliqué à l'entrée de l'amplificateur 17 par l'intermédiaire d'un circuit 25. On effectue ainsi une régulation de la tension continue aux bornes dudit condensateur 6.

Une première réalisation $15_1$ de l'oscillateur est représentée sur la figure 2.

Dans cet exemple l'oscillateur $15_1$ comporte un condensateur 30 dont une armature est à la masse et l'autre armature 32 est reliée à sortie d'un générateur 33 de courant d'intensité I constante.

L'armature 32 est également reliée à la cathode d'une diode 34 dont l'anode est reliée à une borne 35 sur laquelle est appliqué un potentiel constant $V_1$ par l'intermédiaire d'une résistance 36. Le potentiel $V_1$ est inférrieur à l'amplitude maximum, ou amplitude de crête, de la tension $V_s$ délivrée par l'oscillateur, aux bornes du condensateur 30.

Enfin, un interrupteur électronique 37, tel qu'un transistor, est connecté aux bornes du condensateur 30 et est fermé périodiquement pour décharger ce dernier à la fréquence de balayage vertical.

Le fonctionnement de cet oscillateur $15_1$ est le suivant:

Lorsque le potentiel $V_s$ sur l'armature 32 est inférieur au potentiel $V_1$ sur la borne 35, le condensateur 30 est chargé par le courant d'intensité constante I fourni par le générateur 33 et par un courant supplémentaire, qui est le courant de correction, d'intensité i engendré grâce à la différence de potentiel $V_1 - V_s$:

$$i = \frac{V_I - V_s}{R} . \qquad (1)$$

Dans cette formule, où R est la valeur de la résistance 36, on a négligé la chute de tension aux bornes de la diode 34.

Par contre, lorsque la charge du condensateur 30 est suffisante pour que le potentiel $V_s$ soit supérieur au potentiel $V_1$ l'intensité a la valeur nulle en raison de la présence de la diode 34.

Le calcul montre que lorsque $V_2 < V_1$ la tension de sortie $V_s$ varie selon la formule ci-dessous:

$$V_s = (V_o - RI - V_i) \, e^{-\frac{t}{RC}} + RI + V_1 . \qquad (2)$$

Cette formule, dans laquelle $V_o$ est une

constante et t est le temps, montre que la tension de sortie $V_s$ vaire de façon exponentielle.

Les variations de $V_s$ sont représentées sur la figure 4 qui est un diagramme sur lequel on a porté en abscisses le temps t et en ordonnées la tension $V_s$.

On voit sur cette figure 4 qu'au cours de chaque période de balayage d'une trame, la courbe de variation de $V_s$ présente une première partie 40, lorsque $V_s < V_1$, qui est une courbe exponentielle tendant vers la valeur limite $V_1 + RI$ et une seconde partie 41 au cors laquelle le condensateur 30 est chargé uniquement à courant constant. Cette seconde partie 41 est donc un segment de droite.

La valeur maximum $V_2$ de $V_s$ est atteinte quand l'interrupteur 37 est fermé.

Ainsi, on effectue une correction seulement lorsque la tension de sortie $V_s$ est inférieure à $V_1$, au début du balayage d'une trame, c'est-à-dire en haut de l'image. On a en effet constaté que seule cette partie supérieure de l'image nécessitait une correction en raison des distorsions introduites par les condensateurs 6 et 16.

Dans l'exemple, la tension $V_1$ est de l'ordre de la moitié de la tension maximale $V_2$, la correction n'étant nécessaire que pour la moitié supérieure de l'image.

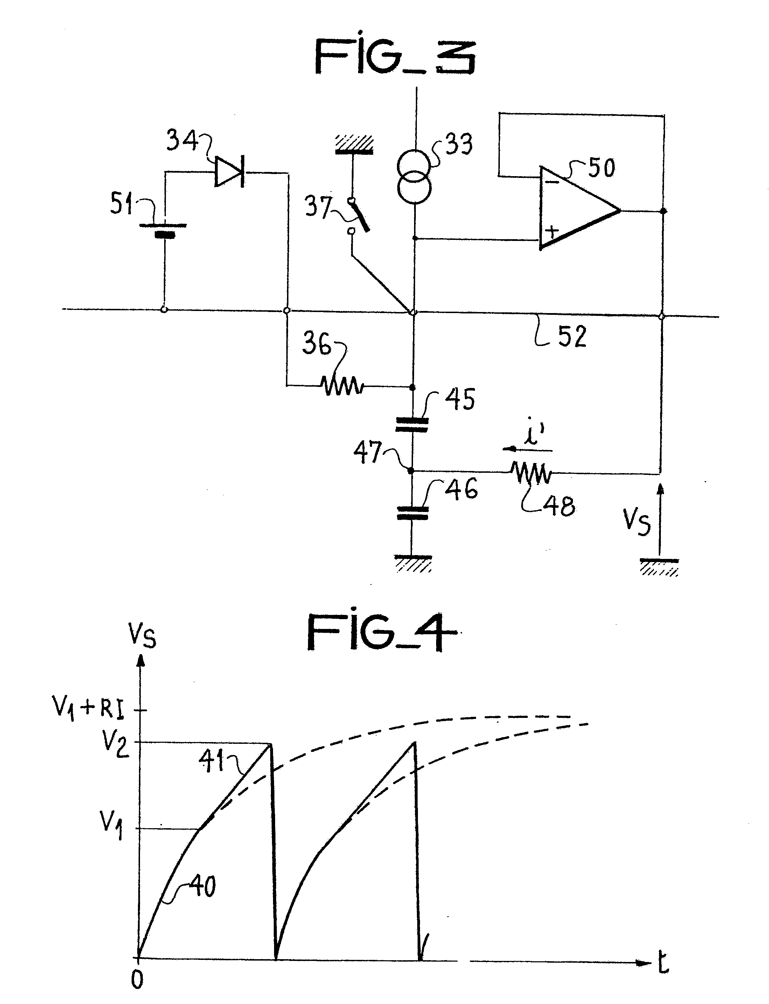

Dans la variante représentée sur la figure 3, le condensateur 30 est remplacé par deux condensateurs 45 et 46 en série et une correction supplémentaire est introduite en chargeant les condensateurs à l'aide d'un courant supplémentaire d'intensité i' proportionnelle à la tension aux bornes du condensateur 45.

Ce courant i' est injecté au nœud 47 entre les deux condensateurs par l'intermédiaire d'une résistance 48 reliée à la sortie d'un amplificateur opérationnel 50 monté en amplicateur-suiveur avec son entrée positive (+) reliée à la sortie du générateur de courant 33 et son entrée négative (—) reliée directement à sa sortie. Le signal appliqué sur l'entrée positive de l'amplificateur 50 représente la tension aux bornes des deux condensateurs 45 et 46 et l'intensité i' est proportionnelle à la tension aux bornes du condensateur 45 car la tension aux bornes de la résistance 48 est la différence entre la tension à la sortie de l'amplificateur 50 et la tension aux bornes du condensateur 46.

Cette correction supplémentaire est du type parabolique, ou en C, et est effectuée sur toute la période de balayagne-trame.

L'oscillateur représenté sur la figure 3 peut être réalisé partiellement sous forme de circuit intégré, la diode 34, l'interrupteur 37, le générateur de courant 33 et l'amplificateur opérationnel 50 faisant partie du circuit intégré, de même que la source 51 permettant d'obtenir le potentiel $V_1$. Par contre, les condensateurs 45 et 46 et les résistance 36 et 48 sont extérieurs au circuit intégré. La limite du circuit intégré a été représentée par la ligne 52 sur la figure 3.

L'invention est susceptible de nombreuses variantes. En particulier, elle s'applique à une correction de balayage horizontal.

## Revendications

1. Dispositif de balayage vertical et/ou horizontal dans un récepteur de télévision comprenant un déviateur traversé par un courant variant en dents de scie affectées d'une correction pour réduire les distorsions de l'image, caractérisé en ce qu'il comprend un moyen (34) pour que la correction ne soit introduite qu'au cours d'une fraction de chaque période de variation du courant dans le déviateur (5).

2. Dispositif selon la revendication 1, caractérisé en ce que le moyen de correction fait partie d'un générateur (15) de commande qui fournit un signal représentant le courant désiré dans le déviateur.

3. Dispositif selon la revendication 2, caractérisé en ce que le générateur comprend un condensateur (30; 45, 46) chargé par un courant constant (I) pendant toute la période et, pendant ladite fraction de période, par un courant supplémentaire (i) destiné à effectuer la correction, le signal de sortie ($V_s$) du générateur étant la tension aux bornes du condensateur.

4. Dispositif selon l'une quelconque des revendications 1 à 3, caractérisé en ce que la correction n'est effectuée qu'au début de chaque période du signal.

5. Dispositif selon les revendications 3 et 4, caractérisé en ce que le courant supplémentaire (i) de correction étant à variation exponentielle, le générateur (15) comporte une source de tension constante ($V_1$) inférieure à la tension ($V_2$) maximale de charge du condensateur (30), qui est connectée audit condensateur par l'intermédiaire d'une diode (34) branchée dans le sens empêchant la circulation du courant (i) de correction lorsque la tension ($V_2$) aux bornes du condensateur est supérieure à la tension constante ($V_1$).

6. Dispositif selon la revendication 5, caractérisé en ce que la diode (34), le générateur (33) de courant constant et un interrupteur (37) aux bornes du condensateur, pour le décharger à la fin de chaque période, font partie d'un circuit intégré.

7. Dispositif selon la revendication 3, caractérisé en ce que le générateur comporte un moyen de correction supplémentaire chargeant le condensateur (45, 46) par un courant (i') à variation parabolique pendant toute la période du signal.

8. Dispositif de balayage vertical selon la revendication 5, caractérisé en ce que la tension constante est égale à environ la moitié de la valeur maximale ($V_2$) de la tension de sortie ($V_s$) de manière que la correction ne soit effectuée que sur la moitié supérieure de l'image.

9. Dispositif de balayage vertical selon la revendication 2, caractérisé en ce que l'énergie pour produire le courant traversant le déviateur vertical (5) est fournie par un enroulement d'un transformateur-ligne (1), ce déviateur étant en série avec un condensateur de liaison (6) et un interrupteur (8) commandé par ledit générateur (15) pour, à chaque période du signal de balayage horizontal, être conducteur pendant un temps fonction du numéro de la ligne correspondante.

10. Dispositif de balayage vertical selon la revendication 9, caractérrisé en ce qu'il comprend un convertisseur tension-temps dont l'entrée est reliée à la sortie du générateur (15) par l'intermédiaire d'un condensateur (16) et dont la sortie commande l'interrupteur (8).

11. Récepteur de télévision, caractérisé en ce qu'il comporte un dispositif selon l'une quelconque des revendications 1 à 10.


**Patentansprüche**

1. Vorrichtung zur vertikalen oder horizontalen Abtastung in einem Fernsehempfänger, der eine Ablenkeinheit umfaßt, die von einem sägezahnförmig variierenden Strom durchflossen wird, der eine Korrektur erfährt um die Verzerrungen des Bilds zu vermindern, dadurch gekennzeichnet, daß sie ein Mittel (34) umfaßt, damit die Korrektur nur im Laufe eines Bruchteils jeder Periode der Stromvariation in der Ablenkeinheit eingeführt wird.

2. Vorrichtung nach Anspruch 1, dadurch gekennzeichnet, daß das Korrekturmittel Teil eines Steuergenerators (15) ist, der ein den in der Ablenkeinheit gewünschten Strom darstellendes Signal liefert.

3. Vorrichtung nach Anspruch 2, dadurch gekennzeichnet, daß der Generator einen Kondensator (30, 45, 46) umfaßt, der während der ganzen Periode von einem konstantem Strom (I) geladen wird und während des Bruchteils der Periode von einem zusätzlichen Strom (i) der zur Ausführung der Korrektur dient, wobei das Ausgangssignal (Vs) des Generators die Klemmenspannung des Kondensators ist.

4. Vorrichtung nach einem der Ansprüche 1 bis 3, dadurch gekennzeichnet, daß die Korrektur nur zu Beginn jeder Periode des Signals ausgeführt wird.

5. Vorrichtung nach den Ansprüchen 3 und 4, dadurch gekennzeichnet, daß, wobei der zusätzliche Korrekturstrom (i) in exponentenförmiger Weise variiert, der Generator (15) eine Gleichspannungsquelle (V₁) mit geringerer Spannung als die Maximalspannung (V₂) der Ladung des Kondensators (30) umfaßt, die mit dem Kondensator über eine Diode (34) geschaltet ist, welche in dem Sinn geschaltet ist, daß sie den Fluß des Korrekturstromes (i) verhindert wenn die Klemmspannung (Vs) des Kondensators größer als die Gleichspannung (V₁) ist.

6. Vorrichtung nach Anspruch 5, dadurch gekennzeichnet, daß die Diode (34), der Gleichstromgenerator (33) und ein Unterbrecher (37) an den Kondensatorklemmen zur Entladung am Ende einer jeden Periode, Teil eines integrierten Schaltkreises sind.

7. Vorrichtung nach Anspruch 3, dadurch gekennzeichnet, daß der Generator ein zusätzliches Korrekturmittel umfaßt, welches den Kondensator (45, 46) während der ganzen Periode des Signals durch einen in parabolförmiger Weise variierenden Strom (i') lädt.

8. Vorrichtung zur vertikalen Abtastung nach Anspruch 5, dadurch gekennzeichnet, daß die Gleichspannung ungefähr die Hälfte des Maximalwertes (V₂) der Ausgangsspannung (Vs) beträgt, so daß die Korrektur nur in der oberen Bildhälfte vorgenommen wird.

9. Vorrichtung zur vertikalen Abtastung nach Anspruch 2, dadurch gekennzeichnet, daß die Energie zum Erzeugen des die Einheit zur vertikalen Ablenkung (5) durchquerenden Stroms von der Wicklung eines Zeilentransformators (1) geliefert wird, wobei diese Ablenkeinheit mit einem Verbindungskondensator (6) in Reihe geschaltet ist und einem Unterbrecher (8), der von dem Generator (15) gesteuert wird, um bei jeder Periode des horizontalen Zeilenabtastsignals während einer Zeit, die Funktion der Nummer der entsprechenden Linie ist, Leiter zu sein.

10. Vorrichtung zur vertikalen Abtastung nach Anspruch 9, dadurch gekennzeichnet, daß er einen Spannungs-Zeit-Konverter umfaßt, dessen Eingang mit dem Ausgang des Generators (15) über einen Kondensator verbunden ist und dessen Ausgang den Unterbrecher (8) steuert.

11. Fernsehempfänger, dadurch gekennzeichnet, daß er eine Vorrichtung nach einem der Ansprüche 1 bis 10 umfaßt.


**Claims**

1. Vertical and/or horizontal scanning device in a television receiver comprising a deflector through-crosses by a saw-tooth varying current modified by a correction in order to reduce image distortions, characterized in that it comprises means 34 so that the correction is only introduced during one fraction of each variation period of the current in the deflector 5.

2. Device according to claim 1, characterized in that the correction means form part of a control generator 15 that supplies a signal representing the current required in the deflector.

3. Device according to claim 2, characterized in that the generator comprises a capacitor 30; 45, 46 charged by a current I constant during the whole period and, during the said period fraction, by a supplementary current i intended to make the correction, the output signal Vs of the generator being the voltage at the terminals of the capacitor.

4. Device according to any one of claims 1 to 3, characterized in that the correction is only made at the beginning of each period of the signal.

5. Device according to claims 3 and 4, characterized in that the supplementary current i of correction varying exponentially, the generator 15 comprises a constant voltage supply V₁ lower

than the maximal voltage $V_2$ of charge of the capacitor 30, that is connected to the said capacitor by the intermediary of a diode 34 connected in the direction preventing the circulation of the current i of correction when the voltage $V_S$ at the terminals of the capacitor is higher than the constant voltage $V_1$.

6. Device according to claim 5, characterized in that the diode 34, the generator 33 of the constant current and a switch 37 at the terminals of the capacitor, in order to discharge it at the end of each period, form part of the integrated circuit.

7. Device according to claim 3, characterized in that the generator comprises supplementary correction means charging the capacitor 45, 46 by a current i' of parabolic variation during the whole period of the signal.

8. Vertical scanning device according to claim 5, characterized in that the constant voltage is equal to about half the maximal value $V_2$ of the output voltage $V_S$ in such a way that the correction is only made on the upper half of the image.

9. Vertical scanning device according to claim 2, characterized in that the energy to produce the current through-crossing the vertical deflector 5 is supplied by a winding of a line-transformer 1, this deflector being in series with a linking capacitor 6 and a switch 8 controlled by the said generator 15 to be, at each signal period of horizontal scanning, conductor during a time in function of the number of the corresponding line.

10. Vertical scanning device according to claim 9, characterized in that it comprises a voltage-time converter of which the input is connected to the output of the generator 15 through the intermediary of a capacitor 16 and the output of which controls the switch 8.

11. Television receiver, characterized in that it comprises a device according to any one of claims 1 to 10.

# FIG_1

# FIG_2

# FIG_3

# FIG_4